# EUROPÄISCHE PATENTSCHRIFT

(11) **EP 3 977 166 B1**
(45) Veröffentlichungstag und Bekanntmachung des Hinweises auf die Patenterteilung: **02.09.2026**
(21) Anmeldenummer: 20728485.2
(22) Anmeldetag: 26.05.2020
(51) Int. Cl.: G01S 13/931, H01Q 1/12, H01Q 21/06

(54) **RADARANTENNENANORDNUNG FÜR EIN FAHRZEUG, UMFASSEND ZUMINDEST EIN FAHRZEUGBAUTEIL, UND FAHRZEUG**
RADAR ANTENNA ARRANGEMENT FOR A VEHICLE, COMPRISING AT LEAST ONE VEHICLE COMPONENT, AND VEHICLE
SYSTÈME D'ANTENNE RADAR POUR UN VÉHICULE COMPRENANT AU MOINS UN ÉLÉMENT STRUCTURAL DE VÉHICULE, ET VÉHICULE

(30) Priorität: 03.06.2019 DE 102019114876
(43) Veröffentlichungstag der Anmeldung: 06.04.2022
(73) Patentinhaber: VOLKSWAGEN AKTIENGESELLSCHAFT, 38440 Wolfsburg (DE); Audi AG, 85045 Ingolstadt (DE)
(72) Erfinder: DR. KURZ, Heiko, 30177 Hannover (DE); BAGDONAT, Thorsten, 38106 Braunschweig (DE); SCHWENKERT, Michael, Ingolstadt 85051 (DE); SCHEYTT, Christoph, 46284 Dorsten (DE); RHEE, Hanjo, 10439 Berlin (DE); SCHNEIDER, Thomas, 14552 Michendorf (DE); SCHOEBEL, Joerg, 38124 Braunschweig (DE); SCHWARTAU, Fabian, 38118 Braunschweig (DE); PREUSSLER, Stefan, 38118 Braunschweig (DE)
(74) Vertreter: Hofstetter, Schurack & Partner
(86) Internationale Anmeldenummer: PCT/EP2020/064570
(87) Internationale Veröffentlichungsnummer: WO 2020/244967

(56) Entgegenhaltungen:
- WO-A1-2017/165728
- DE-B3- 102016 210 771
- DE-T5- 112008 001 232

## Beschreibung

Die Erfindung betrifft eine Radarantennenanordnung für ein Fahrzeug, umfassend zumindest ein Fahrzeugbauteil. Die Erfindung umfasst auch ein Fahrzeug mit einer Radarantennenanordnung und ein Verfahren zum Kalibieren einer Radarantennenanordnung.

Zur Erfassung einer Umgebung eines Fahrzeugs ist es insbesondere in einem autonomen Fahrbetrieb des Fahrzeugs oder bei der Nutzung anspruchsvoller Fahrerassistenzsysteme erforderlich, das komplette Umfeld des Fahrzeugs durch Sensoren, mittels Radar, Lidar oder einer Kamera zu erfassen. Dabei ist eine Erfassung eines Winkelbereichs von 360 Grad um das Fahrzeug nötig, sodass alle statischen und dynamischen Objekte erfasst werden. Hierbei kommt es zusätzlich darauf an, neben einer Richtung auch einen Abstand eines Objekts zu bestimmen. In diesem Fall spricht man von einer sogenannten dreidimensionalen Umwelterfassung. Um eine erforderliche Winkelauflösung erreichen zu können, werden insbesondere LIDAR-Sensoren zu diesem Zweck verwendet. Vorteilhaft an LIDAR-Sensoren ist, dass diese eine Entfernungsmessung mit einer hohen Winkelauflösung kombinieren. Problematisch an einer 360 Grad Umfelderfassung um ein Fahrzeug mittels Lidar ist es, dass eine Vielzahl kleiner Einzelsensoren erforderlich ist, welche jeweilige Lichtquellen und Detektorelemente aufweisen. Alternativ dazu gibt es größere Sensoren, welche jedoch größere Abmessungen aufweisen, sodass die Wahl der Verbaupositionen an einem Fahrzeug eingeschränkt ist. Dieses Problem gewinnt insbesondere an Bedeutung, wenn eine unauffällige Verbauung an dem Fahrzeug gewünscht ist.

In der Verarbeitung der Messdaten der einzelnen LIDAR-Sensoren besteht das Problem, dass die einzelnen LIDAR-Sensoren ihre Messdaten individuell erfassen und prozessieren müssen. In einem nachgelagerten Schritt müssen die verarbeiteten Messdaten zur Erstellung des Umfeldes fusioniert werden. Bei der Fusion der einzelnen Messdaten ist insbesondere ein genauer Zeitstempel bei einer Echtzeitprozessierung erforderlich. Im Einsatz der LIDAR-Sensoren ergibt sich der Nachteil, dass deren Genauigkeit und Betriebsfähigkeit von den aktuellen Sichtverhältnissen abhängt. Insbesondere bei Nebel, Schnee oder bei dunklen Lichtverhältnissen kommt es zu einer Beeinträchtigung der Genauigkeit. Eine ähnliche Problematik, bezogen auf die Sichtverhältnisse ergibt sich bei der Verwendung von Kameras zur Erfassung der Umgebung. Im Gegensatz dazu wird die Umfelderfassung mittels Radar nicht durch Sichtverhältnisse beeinflusst. Der Nachteil an einer Umfelderfassung mittels Radarsensoren besteht in der Bereitstellung einer geeigneten Radaranordnung. Eine Erfassung eines Winkelbereichs mit einer ausreichenden Auflösung erfordert die Bereitstellung einer Gruppenantenne mit einer ausreichend großen Fläche. Die Gruppenantenne, welche auch als Antennenarray bezeichnet wird, weist eine Vielzahl von einzelnen Sensoren zum Aussenden und/oder Empfangen von Radarstrahlen auf. Über die Einstellung oder Bestimmung einer Phasenbeziehung der durch die einzelnen Antennen ausgesandten oder empfangenen Radarstrahlen lässt sich die Richtung des auszusendenden oder des empfangenen Radarstrahls bestimmen. Bei der Auswertung der Messdaten der Radarsensoren ergibt sich das Problem, dass die einzelnen Sensoren miteinander synchronisiert werden müssen, um die Phasenunterschiede zwischen den einzelnen empfangenen Radarstrahlen bestimmen zu können. Nachteilig an dem bekannten Stand der Technik ist, dass Radaranordnungen eine Winkelseparierbarkeit in Azimut von 10 Grad bis 4Grad aufweisen. Die Winkelseparierbarkeit in Elevation ist in der Regel geringer, sodass bildgebende Verfahren für Radardaten nicht verwendet werden können, um eine geforderte Genauigkeit für autonome Fahrzeuge zu erreichen. Zum Vergleich weisen LIDAR-Systeme eine Winkelseparierbarkeit im Bereich von 0,1Grad auf.

Bekannte Radarsensoren für Fahrzeuge nach dem Stand der Technik weisen Abmessungen von ca. 10 cm × 10 cm auf und erlauben eine maximale Winkelauflösung von ca. 2Grad, ohne eine dreidimensionale Umfelderfassung zu ermöglichen. Sogenannte Nanoradare haben dagegen Abmessungen im Bereich von 5 cm × 5 cm und können durch ihre kompakte Bauweise leichter in das Fahrzeug integriert werden. Zur Erhöhung des Auflösungsvermögens kann das sogenannte synthetische Aperturverfahren angewandt werden, um die Auflösung weiter zu erhöhen. Bei der Auswertung der Messdaten in den einzelnen Sensoren ergibt sich wie im Fall der LIDAR-Sensoren die Problematik der zeitlichen Synchronisation. Zur Zusammenführung der Messdaten ist es erforderlich, dass die Zeitstempel übereinstimmen um ein Gesamtbild der Umgebung erstellen zu können. Nanoradare sind nach dem derzeitigen Stand in ihrer Reichweite auf ca. 45 m beschränkt. Das angewandte synthetische Aperturverfahren ist nur senkrecht zur Fahrtrichtung möglich. Eine Voraussicht in oder entgegen der Fahrtrichtung ist mit diesem Verfahren nicht möglich. Außerdem ist die nach der Messung notwendige Datenverarbeitung sehr rechenintensiv. Allgemein ergibt sich das Problem, dass eine Vielzahl an Sensoren erforderlich ist und die Radaranordnung zur Bereitstellung einer erforderlichen Genauigkeit Abmessungen erfordert, die an einem Fahrzeug nur eingeschränkt bereitgestellt werden können.

Die US 5682168A offenbart versteckte Fahrzeugantennen. Hierbei ist es vorgesehen, Antennenelemente unter einer Abdeckung über einem Dachträger oder hinter einem Frontgitter eines Kraftfahrzeugs anzuordnen.

Die US 6118410A offenbart eine Autodachantennenablage, die unter einem Fenster eines Fahrzeugs angeordnet ist. Bei den Fenstern kann es sich beispielsweise um eine Frontscheibe oder eine Heckscheibe handeln, welche eine Befestigungsstruktur zum Anbringen einer Vielzahl von Hochfrequenzantennen aufweist. Das Fenster weist einen verlängerten Bereich auf, der sich über die Autodachantennenablage zum Dach des Fahrzeugs erstreckt und einen Zwischenraum bildet. Die Vielzahl der Antennen ist auf der Antennenablage innerhalb des Zwischenraums angeordnet.

Die US 2014/0354462 A1 offenbart eine Radarvorrichtung zur Anordnung hinter einer Frontscheibe. Es ist vorgesehen, dass die Frontscheibe eine metallische Schicht aufweist, um eine Ausbreitung von Infrarot- und Radarstrahlung durch die Frontscheibe zu verhindern. Die metallische Schicht bildet eine Öffnung, um ein Aussenden und Erfassen von Radarsignalen durch eine Radarvorrichtung zu ermöglichen. Eine Antenne der Radarvorrichtung ist dabei hinter der Frontscheibe angeordnet und zur Öffnung hin ausgerichtet.

Aus der WO 2017/165728 A1 ist eine zweidimensionale Radarantennenanordnung für ein Fahrzeug bekannt, wobei zwei lineare Antennenarrays oberhalb und seitlich von einer Windschutzscheibe des Fahrzeugs angeordnet sind.

Die DE 11 2008 001 232 T5 offenbart ein aktives Radarsystem für ein Fahrzeug, umfassend eine Radarantenne und eine Linsenbaugruppe.

Die DE 10 2016 210 771 B3 beschreibt ein Kraftfahrzeug mit einer Erfassungseinrichtung zur winkelaufgelösten Erfassung des Kraftfahrzeugumfelds durch ein Radarverfahren. Die Erfassungseinrichtung umfasst eine Antenneneinrichtung und eine Zentraleinrichtung, die miteinander über einen Lichtleiter zur optischen Signalübertragung verbunden sind.

Es ist eine Aufgabe der Erfindung, eine Umfelderfassung mittels Radar für ein Fahrzeug mit einer höheren Genauigkeit zu ermöglichen.

Erfindungsgemäß wird eine Radarantennenanordnung für ein Fahrzeug, umfassend zumindest ein Fahrzeugbauteil bereitgestellt. Die Radarantennenanordnung weist mehrere Radareinrichtungen auf, die dazu eigerichtet sind, einen Radarstrahl auszusenden und/oder zu empfangen. Die Radareinrichtungen sind auf einer Bauteilfläche des Fahrzeugbauteils angeordnet. Kennzeichnend ist, dass die Radarantennenanordnung zumindest eine Antennenzeile zur Bestimmung eines Azimutalwinkels des Radarstrahls aufweist, die mehrere der Radareinrichtungen aufweist. Entlang der Antennenzeile sind mehrere der Radareinrichtungen angeordnet, wobei direkt benachbarte Radareinrichtungen jeweilige horizontale Abstände zueinander aufweisen. Die Radarantennenanordnung weist zudem zumindest eine Antennenspalte zur Bestimmung eines Elevationswinkels des Radarstrahls auf. Entlang der Antennenspalte sind mehrere der Radareinrichtungen angeordnet, wobei direkt benachbarte Radareinrichtungen jeweilige vertikale Abstände zueinander aufweisen. Die zumindest eine Antennenzeile und die zumindest eine Antennenspalte schließen einen Winkel von 5 Grad bis 180 Grad ein.

Mit anderen Worten wird ein Radarantennenanordnung bereitgestellt, welche für zumindest ein Fahrzeugbauteil vorgesehen ist. Bei der Radarantennenanordnung handelt es sich um eine Gruppenantenne, die durch die zumindest eine Antennenzeile und die zumindest eine Antennenspalte ein sogenanntes Array in einer Ebene bildet, welche in einer Bauteilfläche des Fahrzeugbauteils liegt. Die zumindest eine Antennenspalte und die zumindest eine Antennenzeile bilden einen inneren Winkel α von 5Grad bis 180 Grad. In der Bauteilfläche sind mehrere Radareinrichtungen angeordnet. Die Radareinrichtungen sind dazu eingerichtet, Radarstrahlen zu empfangen und/oder auszusenden. Innerhalb der zumindest einen Antennenspalte und der zumindest einen Antennenzeile sind mehrere Radareinrichtungen angeordnet, wobei die direkt benachbarten Radareinrichtungen jeweilige Abstände zueinander. Die vertikalen und die horizontalen Abstände können identisch oder verschieden sein. Die Abstände können beispielsweise ganzzählige Vielfache einer vorbestimmten halben Radarwellenlänge betragen. Es kann vorgesehen sein, dass die in der Antennenspalte angeordneten Antenneneinrichtungen dafür vorgesehen sind, einen Elevationswinkel eines empfangenen Radarstrahls zu erfassen oder den Elevationswinkel eines auszusendenden Radarstrahls zu definieren. Die Antennenzeile kann dazu eingerichtet sein, einen Azimutalwinkel eines Radarstrahls zu erfassen oder eines auszusendenden Radarstrahls zu definieren. Durch die Erfindung ergibt sich der Vorteil, dass die Bauteilfläche des Fahrzeugbauteils als Fläche für die Radarantennenanordnung verwendet werden kann. Es kann insbesondere vorgesehen sein, größere Fahrzeugbauteile, wie Türen oder Fenster zur Bereitstellung der Bauteilfläche zu verwenden. Hierdurch kann eine Fläche eines vorhandenen Bauteils des Fahrzeugs für die Radareinrichtungen verwendet werden, ohne dass ein zusätzliches Element zur Bereitstellung der Fläche an einem Fahrzeug angeordnet werden muss.

Erfindungsgemäß ist es vorgesehen, dass die Radarantennenanordnung zumindest einen optischen Leiter aufweist, wobei die Radareinrichtungen über den zumindest einen optischen Leiter mit einer Steuereinheit der Radarantennenanordnung verbunden sind. Der optische Leiter ist dazu eingerichtet, optische Signale zwischen der Steuereinheit und den Radareinrichtungen zu übertragen. Mit anderen Worten ist es vorgesehen, dass die Radareinrichtungen durch eine Steuereinheit gesteuert werden, wobei das Aussenden von Teilstrahlen durch jeweilige Radareinrichtungen mittels optischer Signale von der Steuereinheit gesteuert wird. Zum Übertragen der optischen Signale ist die Steuereinheit durch den zumindest einen optischen Leiter mit den Radareinrichtungen verbunden. Wird durch eine der Radareinrichtungen ein Teilstrahl des Radarstrahls empfangen, wird dieser durch die Radareinrichtung in ein optisches Signal umgewandelt und über den optischen Leiter an die Steuereinheit übertragen. Die Steuereinheit kann die optischen Signale verarbeiten, um einen empfangenen Radarstrahl aus den Teilstrahlen zu rekonstruieren. Dadurch ergibt sich der Vorteil, dass eine Verarbeitung der jeweiligen Teilstrahlen des Radarstrahls in den jeweiligen Radareinrichtungen nicht erforderlich ist und somit kein Zeitstempel durch die Radareinrichtungen bereitgestellt werden muss. Die Auswertung der Messdaten kann somit zentral in der Steuereinheit erfolgen. Somit ist es nicht erforderlich, die einzelnen Radareinrichtungen zu synchronisieren.

Erfindungsgemäß ist weiter vorgesehen, dass das Fahrzeugbauteil eine Fensterscheibe eines Fahrzeugs ist. Mit anderen Worten umfasst die Radarantennenanordnung die Fensterscheibe als das Fahrzeugbauteil. Dadurch ergibt sich der Vorteil, dass die Radarantennenanordnung ein Fahrzeugbauteil mit einer relativ großen Oberfläche aufweist. Es kann beispielsweise vorgesehen sein, dass die einzelnen Radareinrichtungen auf einer Fensterscheibe für ein Fahrzeug angeordnet sind. Die Radareinrichtungen können beispielsweise auf einer dem Fahrzeuginnenraum zugewandten Seite der Fensterscheibe angeordnet sein und sich beispielsweise im Bereich eines Schwarzdrucks positioniert sein. Die Radareinrichtungen können hierbei durch die optischen Leiter miteinander verbunden sein, welche auf der Fensterscheibe angeordnet sein können.

Es ist vorgesehen, dass der zumindest eine optische Leiter zumindest abschnittsweise in der Fensterscheibe angeordnet ist. Mit anderen Worten ist zumindest eine Teilmenge des zumindest einen optischen Leiters von der Fensterscheibe umschlossen. Es kann beispielsweise vorgesehen sein, dass eine als optischer Leiter verwendete Glasfaser zwischen zwei Lagen der Fensterscheibe angeordnet ist. Es kann auch vorgesehen sein, dass eine Aussparung in der Fensterscheibe mit dem optischen Leiter gefüllt ist, um die Radareinrichtungen an oder in der Scheibe zu verbinden.

Die Erfindung umfasst weitere optionale Weiterbildungen, durch die sich weitere Vorteile ergeben.

Eine Weiterbildung der Erfindung sieht vor, dass die zumindest eine Antennenzeile und die zumindest eine Antennenspalte einen Winkel von 60 Grad bis 120 Grad einschließen. Mit anderen Worten spannen die zumindest eine Antennenspalte und die zumindest eine Antennenzeile einen Winkel von 60 Grad bis 120 Grad auf. Es kann beispielsweise vorgesehen sein, dass die zumindest eine Antennenzeile und die zumindest eine Antennenspalte einen Winkel von 90 Grad einschließen.

Eine Weiterbildung der Erfindung sieht vor, dass die jeweiligen horizontalen Abstände und die jeweiligen vertikalen Abstände der Radareinrichtungen ein ganzzähliges Vielfaches einer vorbestimmten Radarwellenlänge betragen, wobei die Radarwellenlänge zwischen 0,011 m bis 0,014 m oder 0,0037 bis 0,0038 m beträgt. Mit anderen Worten weisen direkt benachbarte Radareinrichtungen in der Antennenspalte und/oder der Antennenzeile ein vielfaches der halbe Wellenlänge einer Radarwellenlänge als Abstand auf. Die Wellenlängen entsprechen dabei denen, welche in einem Spektrum von 24,05 GHz bis 24,25 GHz, bzw. 21,65 GHz bis 26,65 GHz oder 77 GHz bis 81 GHz verwendet werden. Dadurch ergibt sich der Vorteil, dass eine konstruktive Überlagerung von Signalen der jeweiligen empfangenen Teilstrahlen des Radarstrahls ermöglicht ist.

Eine Weiterbildung der Erfindung sieht vor, dass die Radareinrichtungen in einer Sparse-Array-Anordnung angeordnet sind. Mit anderen Worten handelt es sich um eine nicht voll besetzte Gruppenantenne, in welcher die jeweiligen vertikalen Abstände und die jeweiligen horizontalen Abstände nicht identisch sind. Entlang der zumindest einen Radarzeile und/oder der zumindest einen Radarspalte sind somit einzelne Positionen nicht mit Radareinrichtungen besetzt. Dadurch ergibt sich der Vorteil, dass die Anzahl der Radareinrichtungen und somit die Menge der auszuwertenden Messdaten reduziert ist. Mittels einer Simulation eines Fernfeldes der Radarstrahlen für eine jeweilige Radarantennenanordnung kann hierbei eine Einsparung von Radareinrichtungen ohne signifikante Auflösungsverluste ermöglicht werden. Bei einer Sparse-Array-Anordnung handelt es sich um eine unterbesetzte, mit anderen Worten, nicht vollständig besetzte Antennenanordnung mit Radareinrichtungen mit einzelnen Abständen, die größer als λ / 2 sind. Mit anderen Worten sind einzelne Positionen, die einen Abstand von λ / 2 zu einer direkt benachbarten Radareinrichtung aufweisen unbesetzt, d.h. an ihnen befindet sich keine Radareinrichtung.

Ein nicht zur Erfindung gehöriges Beispiel sieht vor, dass die Radareinrichtungen in der Fensterscheibe angeordnet sind. Mit anderen Worten ist es vorgesehen, die Radareinrichtungen innerhalb der Fensterscheibe anzuordnen, sodass diese durch die Fensterscheibe zumindest teilweise umschlossen sind. Es kann beispielsweise vorgesehen sein, dass es sich bei der Fensterscheibe um eine Mehrlagenscheibe handelt, welche sich aus mehreren Lagen zusammensetzt. Die Radareinrichtungen können hierbei zwischen benachbarten Lagen der Fensterscheibe angeordnet sein. Dadurch ergibt sich der Vorteil, dass die Radareinrichtungen an bestimmten Position fixiert sind, welche durch thermische Schwankungen nur in einem geringen Umfang beeinflusst werden.

Ein weiteres, nicht zur Erfindung gehöriges Beispiel sieht vor, dass das Fahrzeugbauteil eine A-Säule, eine B-Säule und/oder eine C-Säule für ein Fahrzeug ist. Mit anderen Worten weist die Radareinrichtung eine A-,B-, oder C-Säule auf. Dadurch ergibt sich der Vorteil, dass die Radareinrichtungen in einem Bereich angeordnet werden können, der für einen Fahrer nicht sichtbar ist.

Ein weiteres, nicht zur Erfindung gehöriges Beispiel sieht vor, dass das Fahrzeugbauteil ein Element der Fahrzeugkarosserie ist. Mit anderen Worten ist es vorgesehen, das die Radarantennenanordnung ein Bauteil einer Karosserie des Fahrzeugs aufweist. Es kann beispielsweise vorgesehen sein, die Radareinrichtungen auf oder in einer Frontschürze, einem Kotflügel oder einem Stoßfänger des Fahrzeugs angeordnet sind. Dadurch ergibt sich der Vorteil, dass Fahrzeugflächen, die in unterschiedliche Richtungen weisen verwendet werden können. Somit kann eine 360 Grad Winkelabdeckung durch mehrere Radarantennenanordnungen des Fahrzeugs ermöglicht werden.

Eine Weiterbildung der Erfindung sieht vor, dass eine Hauptabstrahlrichtung zumindest einer der Radareinrichtungen in einem Brewsterwinkel zu einer äußeren Oberfläche der Fensterscheibe ausgerichtet ist. Mit anderen Worten ist die zumindest eine Radareinrichtung derart ausgerichtet, dass ein von der Radareinrichtung ausgesandter Teilstrahl in der Hauptabstrahlrichtung der Radareinrichtung in einem Brewsterwinkel auf die Grenzfläche zwischen der Fensterscheibe und der Luft auftrifft. Dadurch ergibt sich der Vorteil, dass polarisierte Radarstrahlen aus der Fensterscheibe abgegeben werden und ein Anteil der in der Fensterscheibe eingekoppelten Radarstrahlung minimiert wird.

Die Erfindung umfasst auch ein Verfahren zur Kalibrierung einer Radarantennenanordnung. In dem Verfahren ist es vorgesehen, dass durch die Steuereinheit mittels eines optischen Signals eine erste der Radareinrichtungen zur Abgabe eines vorbestimmten Teilstrahls angesteuert wird. Durch die erste der Radareinrichtungen wird der vorbestimmte Teilstrahl ausgesandt. Zumindest ein Teil des Teilstrahls wird innerhalb der Fensterscheibe reflektiert, sodass er sich innerhalb der Scheibe weiter ausbreitet. Der innerhalb der Scheibe reflektierte Teil des Teilstrahls wird von einer zweiten der Radareinrichtungen empfangen. Durch die zweite der Radareinrichtungen wird ein optisches Signal an die Steuereinheit übertragen. Durch die Steuereinheit wird ein Abstand zwischen der ersten und der zweiten der Radareinrichtungen bestimmt. Mit anderen Worten wird durch die Steuereinrichtung eine Relativlage der ersten der Radareinrichtungen und der zweiten der Radareinrichtungen bestimmt. Dies erfolgt, indem die Steuereinheit eine Abgabe des vorbestimmten Kaliberration Streits durch die erste der Steuereinheiten mittels des optischen Signals veranlasst. Der Teilstrahl wird durch die erste der Radareinrichtungen in die Fensterscheibe abgegeben. An der äußeren Oberfläche der Fensterscheibe tritt ein Teil des Teilstrahls aus der Fensterscheibe aus. Der übrige Teil des Teilstrahls kann an der äußeren Oberfläche in die Fensterscheibe zurück reflektiert werden. Durch Mehrfachreflexionen kann sich der Teil des Teilstrahls innerhalb der Fensterscheibe ausbreiten. Der reflektierte Teilstrahl kann auf die zweite der Radareinrichtungen treffen und durch diese erfasst werden. Die zweite der Radareinrichtungen sendet daraufhin das optische Signal an die Steuereinheit. Diese kann nun, beispielsweise basierend auf der Phasenlage des empfangenen Teilstrahls den Abstand zwischen den beiden Radareinrichtungen bestimmen. Es kann vorgesehen sein, dass beispielsweise mehrere der Radareinrichtungen zur Abgabe eines jeweiligen Teilstrahls durch die Steuereinheit angesteuert werden. Mittels einer Auswertung der von den jeweiligen Radareinrichtungen übersandten optischen Signale kann durch die Steuereinheit die geometrische Relation zwischen den einzelnen Radareinrichtungen in der Radarantennenanordnung bestimmt werden.

Die Erfindung umfasst auch ein Fahrzeug mit zumindest einer Radarantennenanordnung. Bei dem Fahrzeug kann es sich beispielsweise um einen Lastkraftwagen, oder einen Personenkraftwagen handeln. Es kann vorgesehen sein, dass das Fahrzeug beispielsweise mehrere der Radarantennenanordnungen aufweisen kann, wobei ein Bereich von 360 Grad, in der Ebene um das Fahrzeug ab gedeckt werden kann.

Zu der Erfindung gehören auch Weiterbildungen des erfindungsgemäßen Fahrzeugs und des erfindungsgemäßen Verfahrens, die Merkmale aufweisen, wie sie bereits im Zusammenhang mit den Weiterbildungen der erfindungsgemäßen Radarantennenanordnung beschrieben worden sind. Aus diesem Grund sind die entsprechenden Weiterbildungen des erfindungsgemäßen Fahrzeugs und des erfindungsgemäßen Verfahrens hier nicht noch einmal beschrieben.

Die Erfindung umfasst auch die Kombinationen der Merkmale der beschriebenen Ausführungsformen.

Im Folgenden ist ein Ausführungsbeispiel der Erfindung beschrieben. Hierzu zeigt:
- Fig. 1: eine Radarantennenanordnung;
- Fig. 2: eine mögliche Anordnung der Radareinrichtungen in einer Antennenzeile oder in einer Antennenspalte der Radarantennenanordnung;
- Fig. 3: eine mögliche Ausführungsform der Radarantennenanordnung;
- Fig. 4: eine mögliche Ausführungsform eines Fahrzeugs mit einer Radarantennenanordnung; und
- Fig. 5: eine möglichen Ablauf eines Verfahrens zur Kalibration einer Radarantennenanordnung.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

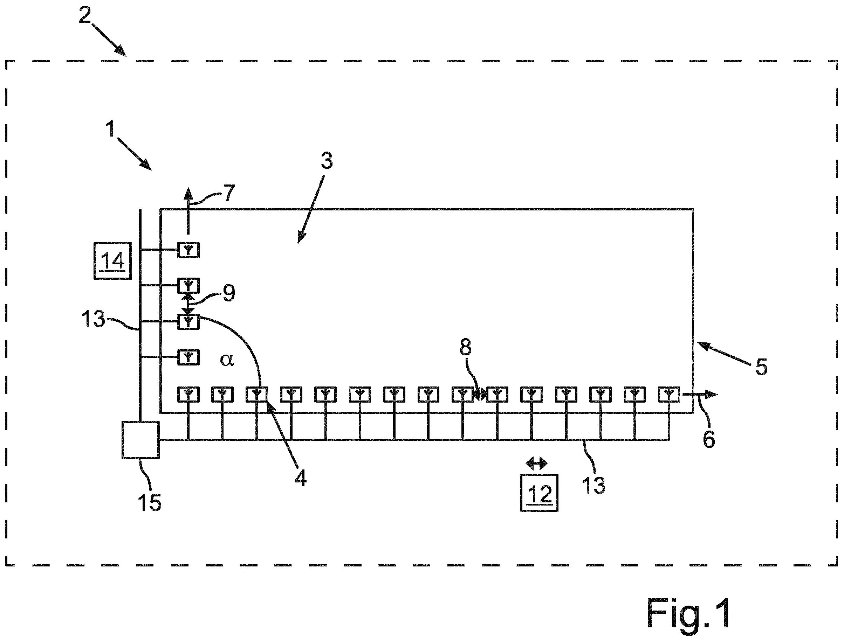

Figurenbeschreibung Fig. 1 zeigt eine Radarantennenanordnung 1. Die Radarantennenanordnung 1 kann für ein Fahrzeug 2 vorgesehen sein, und zumindest ein Fahrzeugbauteil 3 aufweisen. Die Radarantennenanordnung 1 kann mehrere Radareinrichtungen 4 aufweisen, welche auf einer Bauteilfläche 5 des Bauteils 3 angeordnet sein können. Die Radareinrichtungen 4 können in zumindest einer Antennenzeile 6 und zumindest einer Antennenspalte 7 angeordnet sein. Jeweils direkt benachbarte Radareinrichtungen 4 können in der zumindest einen Antennenzeile 6 jeweilige horizontale Abstände 8 zueinander aufweisen, in der Antennenspalte 7 können benachbarte Radareinrichtungen 4 jeweilige vertikale Abstände 9 zueinander aufweisen, die zumindest eine Antennenzeile 6 kann zur Bestimmung eines Azimutalwinkels 10 eines Radarstrahls 12 vorgesehen sein. Die zumindest eine Antennenspalte 7 kann zur Bestimmung eines Elevationswinkels 11 des Radarstrahls 12 vorgesehen sein. Die einzelnen Radareinrichtungen 4 können über einen optischen Leiter 13 zur Übermittlung von optischen Signalen 14 mit einer Steuereinheit 15 verbunden sein. Die einzelnen Radareinrichtungen 4 können dazu eingerichtet sein, bei einem Empfang eines Teilstrahls 12a des Radarstrahls 12 ein optisches Signal 14 zu erstellen und an die Steuereinheit 15 zur Auswertung zu übertragen. Die Steuereinheit 15 kann beispielsweise einen Mikroprozessor oder einen Mikrocontroller aufweisen und dazu eingerichtet sein, die einzelnen optischen Signale 14 zu empfangen und auszuwerten. Es kann vorgesehen sein, dass die Steuereinheit 15 mittels einer Fusion der optischen Signale 14 den Azimutalwinkel 10 und den Elevationswinkel 11 eines empfangenen Radarstrahls 12 bestimmt. Es kann vorgesehen sein, dass der Elevationswinkel 11 des Radarstrahls 12 durch eine Auswertung der optischen Signale der in der Antennenspalte 7 angeordneten Radareinrichtungen 4 bestimmt wird und der Azimutalwinkels 10 mittels einer Auswertung der optischen Signale 14 der Radareinrichtungen 4 in der Antennenzeile 6. Der Ursprung kann beispielsweise über einen Phasenunterschied zwischen den jeweils empfangenen Teilstrahlen 12a des Radarstrahls an einer jeweiligen Radareinrichtung 4 bestimmt werden. Die Auswertung in der Steuereinheit 15 weist den Vorteil auf, dass keine Auswertung in den einzelnen Radareinrichtungen 4 erforderlich ist. Dadurch, dass entfällt die Synchronisation zwischen den einzelnen Radareinrichtungen 4, welche gewöhnlicherweise erforderlich ist, um synchrone Zeitstempel in einem ausgewerteten Signal bereitzustellen.

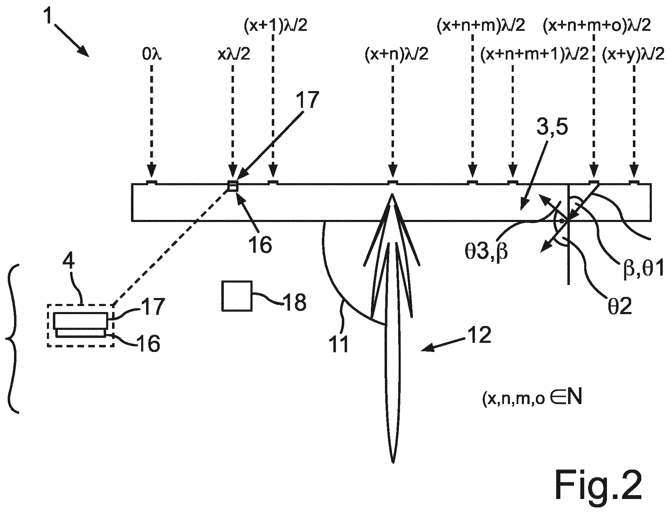

Fig. 2 zeigt eine mögliche Anordnung der Radareinrichtungen in einer Antennenzeile oder in einer Antennenspalte der Radarantennenanordnung. Die Radarantennenanordnung 1 kann mehrere der Radareinrichtungen 4 aufweisen, welche beispielsweise auf einer einem Fahrzeuginnenraum zugewandten Seite einer Fensterscheibe angeordnet sein können. Die Radareinrichtungen 4 können dabei jeweils eine Radarantenne 16 und einen Radarchip 17 zur Bereitstellung und/oder zum Empfang des auszusenden Radarstrahls 12 umfassen. Die Radareinrichtungen 4 können entlang der Antennenzeile 6 bzw. der Antennenspalte 7 an vorbestimmten Positionen angeordnet sein, sodass sie jeweilige Abstände 8,9 zueinander aufweisen, welche ein ganzzähliges Vielfaches der halben Wellenlänge λ sind. Es kann vorgesehen sein, dass die einzelnen Radareinrichtungen 4 entlang der Antennenzeile 6 und oder einer Antennenspalte 7 in einer sogenannten Sparse-Array-Anordnung angeordnet sind. Dies bedeutet, dass einzelne Positionen unbesetzt sind, sodass es sich um keine vollbesetztes Array einer Radarantennenanordnung 1 handelt. Dadurch ergibt sich der Vorteil, dass die Anzahl der Radareinrichtungen 4 reduziert ist. Durch eine vorbestimmte Anordnung kann es somit erreicht werden, dass eine vorbestimmte Auflösung bereitgestellt, und dabei die Anzahl der Radareinrichtung 4 reduziert werden kann. Durch eine Überlagerung der von den einzelnen Radareinrichtungen 4 ausgesandten Einzelstrahlen 12a kann der Radarstrahl 12 als resultierende Radarstrahlen bereitgestellt werden. Es handelt sich somit um eine Gruppenantenne. Die Radareinrichtungen 4 können einen jeweiligen Radarchip 17 und eine jeweilige Radarantenne 16 aufweisen. Die Radareinrichtungen 4 können direkt auf einer Fensterscheibe angeordnet sein. Die von den Radareinrichtungen 4 ausgesandten jeweiligen Einzelstrahlen 12a durchdringen das Material des Fahrzeugbauteils 3 und bilden durch Interferenzen eine für Gruppenantennen charakteristische Keule mit einem Radarstrahl 12 in einem Fernfeld der Radarantennenanordnung 1. Über eine Festlegung der Phasenlagen der jeweiligen Einzelstrahlen 12a durch die Steuereinheit 15 lässt sich beispielsweise der Elevationswinkel 11 des Radarstrahls 12 festlegen. Es kann vorgesehen sein, dass eine oder mehrere der Radareinrichtungen 4 so ausgerichtet sind, dass sie ihren jeweiligen Einzelstrahl 12a der Art auf eine Grenzfläche der Fahrzeugscheibe abstrahlen, dass der Eintrittswinkel θ1 mit dem Brewsterwinkel β übereinstimmt. In diesem Fall wird ein Teil des Einzelstrahls unter einem Austrittswinkel θ2 in polarisierter Form ausgegeben. Ein restlicher Teil kann unter dem Reflexionswinkel θ3 in die Scheibe gekoppelt werden.

Die Abstände 8, 9 zwischen benachbarten Radareinrichtungen 4 können voneinander abweichen. Es kann beispielsweise vorgesehen sein, dass nicht jeder der Abstände 8, 9 eine halbe Wellenlänge beträgt, sondern ein ganzzahliges Vielfaches einer halben Wellenlänge λ.

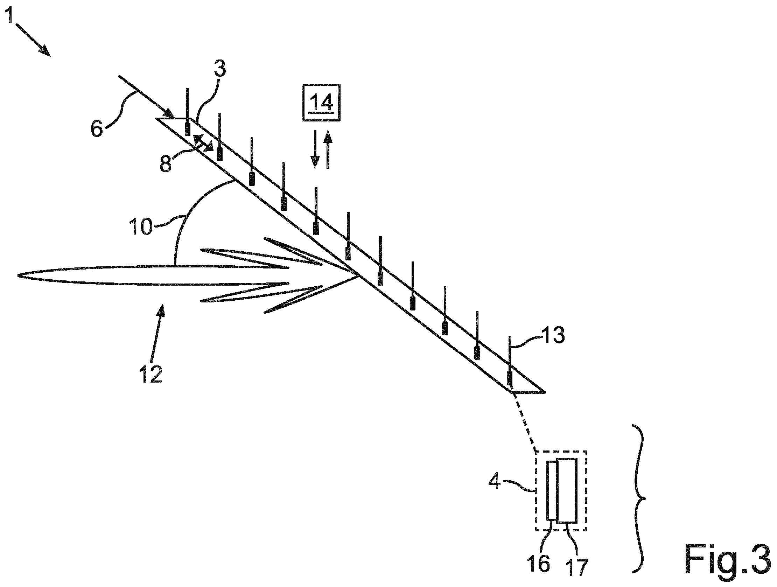

Fig. 3 zeigt eine mögliche Ausführungsform der Radarantennenanordnung 1. Es kann vorgesehen sein, dass die Radareinrichtungen 4 innerhalb der des Fahrzeugbauteils 3 angeordnet sein können. Die Radareinrichtungen 4 können in einer Antennenzeile 6 angeordnet sein, um eine Bestimmung eines Azimutalwinkels 10 des Radarstrahls 12 definieren oder erfassen zu können. Mittels einer vorbestimmten Ansteuerung der jeweiligen Radareinrichtungen 4 durch die Steuereinheit 15 über optische Signale 14 kann es vorgesehen sein, einen resultierenden Radarstrahl 12 mit einem vorbestimmten Azimutalwinkel 10 über Interferenzen zu generieren. Bei einem Empfang des Radarstrahls können durch die jeweiligen Radareinrichtungen 4 optische Signale 14 an die Steuereinheit 15 übertragen werden. Aus einer Phasenlage der optischen Signale 14 kann die Steuereinheit 15 den Azimutalwinkel 10 des Radarstrahls 12 berechnen. Es kann beispielsweise vorgesehen sein, dass die Fensterscheibe eine Mehrlagenscheibe ist, wobei Abschnitte des zumindest einen optischen Leiters 13 innerhalb der Fensterscheibe angeordnet sind Sie können somit beispielsweise zwischen zwei Lagen der Fensterscheibe angeordnet sein. Dadurch ergibt sich der Vorteil, dass die einzelnen Radareinrichtungen 4 an ihrer Position fixiert sind. Die einzelnen Radareinrichtungen 4 können über den zumindest einen optischen Leiter 13 mit der Steuereinheit 15 verbunden sein. Die Anordnung weist den Vorteil auf, dass die Radareinrichtungen 4 an einer geschützten Position angeordnet sind.

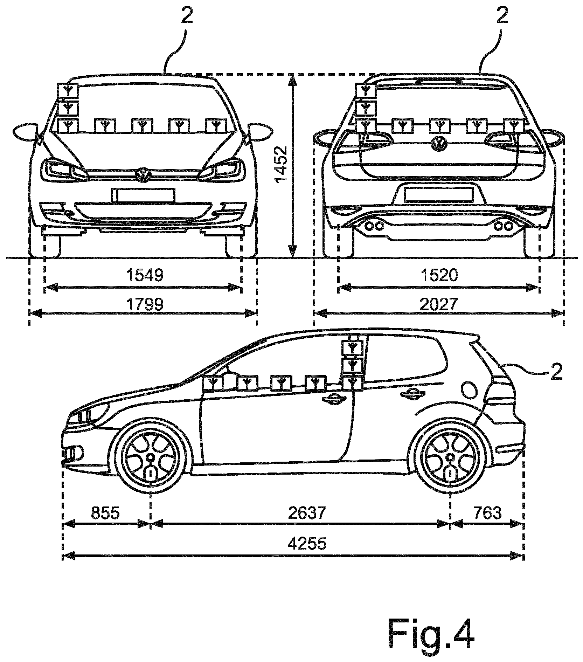

Fig. 4 zeigt eine mögliche Ausführungsform eines Fahrzeugs mit einer Radarantennenanordnung. Es kann vorgesehen sein, dass die Radarantennenanordnung 1 an unterschiedlichen Bauteilen 5 des Fahrzeugs 2 angeordnet sein können. Es kann beispielsweise vorgesehen sein, dass eine Radarantennenanordnung 1 auf einer Frontscheibe des Fahrzeugs einer Heckscheibe und einer Seitenscheibe des Fahrzeugs 2 angeordnet sein können. Es kann auch vorgesehen sein, dass die eine Radarantennenanordnung 1, beispielsweise in einer Tür einer einem Stoßdämpfer oder einer ABC Säule angeordnet ist. Durch die Verwendung mehrerer Radarantennenanordnungen 1 an verschiedenen Fahrzeugbauteilen 5 des Fahrzeugs 2 ergibt sich der Vorteil, dass eine 360 Grad Abdeckung durch die Radarantennenanordnung 1 ermöglicht sein kann.

Die Figur zeigt somit Fahrzeug 2 mit mehreren Radarantennenanordnung 1 an verschiedenen Fahrzeugbauteilen 5. Die Radarantennenanordnungen 1 können mehrere der Radareinrichtungen 4 aufweisen und zusammen eine Radarantennenanordnung 1 bilden, welche einen Winkelbereich von 360 Grad um das Fahrzeug 2 erfassen kann. Zu diesem Zweck kann eine Anordnung der Radareinrichtungen 4 an Fensterscheiben des Fahrzeugs 2, wie den Front-, Heck- und/oder Seitenscheiben vorgesehen sein. An Karosseriebauteilen, wie den Stoßdämpfern oder den Kotflügeln können ebenfalls Radareinrichtungen 4 angeordnet sein. eine Anordnung an A-, B-, C-säulen ermöglicht eine Anordnung an dem Fahrzeug, ohne die Sicht des Fahrers einzuschränken. Eine Anordnung an der Frontscheibe kann derart gestaltet sein, dass die zumindest eine Antennenspalte 7 und die zumindest eine Antennenzeile 6 einen Winkel von beispielsweise 60 bis 120 Grad zueinander aufweisen und eine ebene einer Gruppenantenne aufspannen. Es kann auch vorgesehen sein, dass jeder der Kanten der Frontscheibe eine Antennenzeile 6 oder eine Antennenspalte 7 zugeordnet ist, sodass die Fläche der Frontscheibe von den Radareinrichtungen 4 begrenzt ist. Eine dreidimensionale Erfassung der Umgebung kann erreicht werden, wenn eine Distanz von Objekten, an denen Radarstrahlen 12 reflektiert werden, gemessen wird.

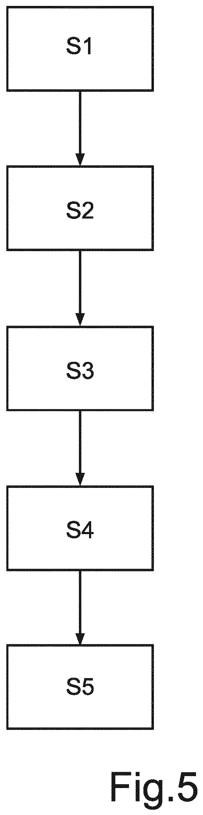

Fig. 5 zeigt einen Ablauf eines Verfahrens zum Kalibrieren einer Radarantennenanordnung.

Es kann vorgesehen sein, dass Radareinrichtungen 4 der Radarantennenanordnung 1 auf einer Fensterscheibe als Fahrzeugbauteil 5 angeordnet sein können. Um die genauen Abstände 8,9 zwischen benachbarten Radareinrichtungen 4 bestimmen zu können, kann die Durchführung des beschriebenen Verfahrens vorgesehen sein.

In einem ersten Schritt S1 des Verfahrens kann die Steuereinheit 15 zum Aussenden eines Teilstrahls 12a durch eine erste der Radareinrichtungen 4, ein optisches Signal 14 über den zumindest einen optischen Leiter an die erste der Radareinrichtungen 4 aussenden.

In einem Schritt S2 kann die erste der Radareinrichtungen 4 das optische Signal 14 empfangen und den Teilstrahl 12a in die Fensterscheibe aussenden.

In einem Schritt S3 kann der Teilstrahl 12a auf eine Grenzfläche der Fensterscheibe zu der Luft auftreffen und teilweise reflektiert werden, sodass ein Teil des Teilstrahls 12a in die Fensterscheibe zurückgestrahlt wird. Der zurückgestrahlte Teilstrahl 12a kann auf eine weitere Grenzfläche zwischen der Scheibe und der Luft treffen und teilweise erneut in die Scheibe zurück reflektiert werden. Dadurch ist es möglich, dass sich der Teilstrahl 12a innerhalb der Fensterscheibe ausbreitet.

In einem Schritt S4 kann der Teilstrahl 12a von einer zweite der Radareinrichtungen 4 erfasst werden. Die zweite der Radareinrichtungen kann daraufhin ein optisches Signal 14 über den zumindest einen optischen Leiter 13 an die Steuereinheit 15 versenden.

In einem Schritt S5 kann die Steuereinheit 15 das optische Signal 14 empfangen und beispielsweise aus einem zeitlichen Abstand zwischen dem Aussenden des optischen Signals 14 zum Ausstrahlen des Teilstrahls 12a und dem Empfangen des optischen Signals der zweiten der Radareinrichtungen 4 oder über einer Phasendifferenz, den Abstand 8,9 zwischen der ersten und der zweiten der Radareinrichtungen 4 bestimmen.

Für das automatischen Fahren ist eine möglichst sichere Umfeldwahrnehmung unabdinglich. Dabei wird das Umfeld mit Hilfe von Sensoren, wie Radar, Lidar und Kamera erfasst. Besonders wichtig ist eine ganzheitliche 360 Grad-3D- Erfassung der Umwelt, so dass alle statischen und dynamischen Objekte erfasst werden. Insbesondere dem Lidar kommt in der redundanten, robusten Umfelderfassung eine tragende Rolle zugute, da dieser Sensortyp präzise in der Umfelderfassung Entfernungen messen und auch zur Klassifikation eingesetzt werden kann. Allerdings sind diese Sensoren kostenintensiv und in ihrem Aufbau aufwändig. Insbesondere die 360 Grad-3D-Umfelderfassung ist problematisch, da entweder viele kleinere Einzelsensoren notwendig sind um dieses zu gewährleisten, welche in der Regel mit vielen einzelnen Lichtquellen und Detektorelementen arbeiten, oder es werden große Sensoren verbaut. Allerdings sind auch die kleineren Sensortypen noch in ihren räumlichen Abmessungen im Bereich von 10 cm x 10 cm x 10 cm und erlauben bisher keine nicht sichtbare Verbauposition. Weiterhin müssen die von jedem Sensor individuell gesammelten Messdaten einzeln prozessiert und/oder fusioniert werden. Dabei ist insbesondere die genaue Zeitstempelung für die Echtzeitprozessierung wichtig, was die Datenerfassung und Klassifikation zusätzlich aufwändig gestaltet. Im Bereich der passiven Sicherheitssysteme, sowie für das automatische Fahren in Stufe vier und fünf ist die Unterscheidbarkeit der Verkehrsteilnehmer sowohl für den Schutz der Insassen als auch der Verkehrsteilnehmer von besonderer Bedeutung. Dazu ist die sichere Umfeldwahrnehmung unabdinglich. Um diese zu garantieren, muss das Umfeld mit möglichst hoher Auflösung in allen drei Raumdimensionen Wahrgenommen werden. Moderne Kamera und LIDAR-Systeme sind in der Lage diese Umfeldwahrnehmung zu gewährleisten, werden jedoch in ihrer Qualität beeinflusst oder versagen gänzlich bei schlechten Sichtverhältnissen wie Nebel, Schnee oder in der Dunkelheit. Radarsensoren hingegen unterliegen nicht diesen Limitierungen, müssen allerdings zur 3D-Bildgebung mit hoher Auflösung in einer Array-Anordnung mit einer Vielzahl verschiedener Sensoren angeordnet werden. Darüber hinaus müssen diese bezüglich ihrer Sende- und Empfangszeit synchronisiert werden, was technisch äußerst herausfordernd ist. Daher ist es von Vorteil, wenn die einzelnen Radarsensoren so klein, einfach, flexibel, fehlertolerant, robust und preiswert wie möglich sind. Zu diesem Zweck muss so wenig Elektronik wie möglich auf dem Radarsensor selbst verbaut sein, und die digitale Datenverarbeitung dezentral innerhalb einer zentralen Steuerungseinheit geschehen. Konventionelle in Radarsysteme in Serienproduktion weisen eine Winkelseparierbarkeit in Azimuth von 10 Grad bis 4Grad auf. Die Winkelseparierbarkeit in Elevation ist i. d. R. sogar geringer, so dass bildgebende Verfahren für Radardaten nicht verwendet werden können. Die Winkelseparierbarkeit von aktuellen LiDAR-Systemen ist im Bereich von 0,1Grad, was mit aktuellen Radarsystemen nicht erreicht werden kann.

Aktuelle Radarsensoren, die im Auto verbaut werden haben meist Abmessungen von 10x10cm. Die damit erzielte maximale Winkelauflösung beträgt ca. 2Grad und erlaubt lediglich eine 2D-Umfeldwahrnehmung. Die aktuellen Radarsensoren haben für Fahrzeuge zu große räumliche Abmessungen bei kleiner Apertur aus welcher ein zu geringes Auflösungsvermögen resultiert. Dieses lässt keine hinreichende Umfeldwahrnehmung für autonomes Fahren zu. Der Verbau mehrerer Sensoren bedingt deren zeitliche Synchronisation, welche technisch herausfordernd und kostenintensiv ist. Nanoradare haben Abmessungen im Bereich von 5x5cm und können durch ihre kompakte Bauweise leichter in das Fahrzeug integriert werden. Nanoradare weisen die gleichen Nachteile auf. Darüber hinaus ist die Reichweite der Nanoradare derzeit auf ca. 45m limitiert, was insbesondere für innerstädtische Szenarien zu gering ist. Das Auflösungsvermögen kann mittels des synthetischen Aperturverfahrens (engl.: "Synthetic Aperture Radar", SAR) bis in den cm-Bereich erhöht werden. Das SAR-Verfahren ist nur senkrecht zur Fahrtrichtung möglich. Eine Voraussicht in oder entgegen der Fahrtrichtung ist mit diesem Verfahren nicht möglich. Außerdem ist die nach der Messung notwendige Datenprozessierung sehr rechenintensiv.

Der Verbau vieler elektronischer Komponenten innerhalb der Sensoren erhöht deren räumliche Abmessungen und Kosten, sodass die Verwendung mehrerer Sensoren nicht umsetzbar ist. Darüber hinaus ist die zeitliche Synchronisation der Sensoren technisch herausfordernd. Soll die Apertur durch Verteilung der Antennen und anschließende dezentrale digitale Datenverarbeitung innerhalb einer zentralen Steuerungseinheit geschehen, ist jedoch die elektrische Übertragung des Sende- und Empfangssignals problematisch, da die Verluste mehrere dB betragen würde.

Weiterhin ist es erforderlich, mehre einzelne Sensoren zu verwenden. Große räumliche Abmessungen der Sensoren erlauben keinen verdeckten Verbau an einem Fahrzeug, sodass diese sichtbar bleiben. Durch die Verwendung mehrere einzelner Sensoren ist ein relativ hoher Aufwand für Synchronisation der einzelnen Sensoren notwendig. Die Datenfusion ist zudem aufwändig und fehleranfällig, da keine zentrale Datenerfassung erfolgt, sondern jeder einzelne Sensor die Messdaten selbst erfasst und weiterleitet. Daraus resultieren hohe Kosten.

Die Radarantennenanordnung nutzt photonisch integrierte Radarchips als Radareinrichtungen, um ein großes Radararray aufzuspannen.

Die Radareinrichtungen, sind zumindest abschnittsweise über den mindestens einen optischen Leiter mit der Steuereinheit verbunden. Die Steuereinheit weist eine zentrale optische Sendeeinheit auf, welche derart ausgebildet ist, ein optisches Radartreibersignal bereitzustellen und dieses in den mindestens einen optischen Leiter einzukoppeln. Die Radareinrichtungen weisen eine jeweilige optische Empfangseinheit und einen Radarsender auf, wobei die optische Empfangseinheit derart ausgebildet ist, das optische Radartreibersignal über den mindestens einen optischen Leiter zu empfangen und in ein elektrisches Radartreibersignal umzuwandeln und dieses zum Antreiben des Radarsenders bereitzustellen. Die Radareinrichtungen weisen einen Radarempfänger, einen Mischer und eine optische Modulationseinheit auf, wobei der Mischer derart ausgebildet ist, ein von dem Radarempfänger empfangenes Radarechosignal mit dem elektrischen Radartreibersignal zu mischen, und wobei die Modulationseinheit derart ausgebildet ist, das gemischte Signal auf das optische Radartreibersignal aufzumodulieren und in den mindestens einen optischen Leiter einzukoppeln. Die Zentraleinheit umfasst ferner eine zentrale optische Empfangseinheit und eine Auswerteeinheit, wobei die Auswerteeinheit derart ausgebildet ist, das von der zentralen optischen Empfangseinheit empfangene aufmodulierte Signal auszuwerten und eine hieraus abgeleitete Radarinformation auszugeben.

Die Grundidee der Erfindung ist, eine Signalübertragung zwischen einer Zentraleinheit und einer Radarsendeeinheit bzw. einer Radarempfangseinheit optisch zu realisieren. Hierzu wird ein Radartreibersignal in der Zentraleinheit optisch erzeugt und über mindestens eine Glasfaser an mindestens eine Radarempfangseinheit und/oder mindestens eine Radarsendeeinheit übertragen. In der Radarsendeeinheit wird das optische Radartreibersignal dann in ein elektrisches Radartreibersignal umgewandelt und zum Antreiben eines Radarsenders verwendet. Ein von einem Radarempfänger empfangenes Radarechosignal wird in einem Mischer der Radarempfangseinheit mit dem elektrischen Radartreibersignal gemischt. Das gemischte Signal wird anschließend mittels einer Modulationseinheit auf das optische Treibersignal aufmoduliert, in die Glasfaser eingekoppelt und an die Zentraleinheit zurück übermittelt. In der Zentraleinheit wird das aufmodulierte optische Signal empfangen und mittels einer Auswerteeinheit ausgewertet. Das Ergebnis wird anschließend als Radarinformation bereitgestellt. Der Vorteil der Erfindung ist, dass eine Kointegration von optischen und elektrischen Bauteilen zur Erzeugung und zum Empfang eines Radarechosignals erfolgt. Die Erzeugung des Radartreibersignals erfolgt optisch und zentral in der Zentraleinheit, die Übertragung an eine Radarsendeeinheit bzw. an eine Radarempfangseinheit erfolgt ebenfalls optisch. Hierbei kann die um Größenordnungen geringere Dämpfung eines Signals bei der Übertragung über eine Glasfaser im Gegensatz zu einer elektrischen Übertragung genutzt werden. Die geringere Dämpfung ermöglicht es, eine große Anzahl von Radarsendeeinheiten und Radarempfangseinheiten gemeinsam mit einem Radartreibersignal zu versorgen. Darüber hinaus haben Glasfasern ein deutlich geringeres Gewicht als entsprechende elektrische Leitungen und sind weniger empfindlich gegenüber äußeren Störungen, wie beispielsweise elektromagnetischen Feldern.

Ein weiterer Vorteil der zentralen optischen Erzeugung des Radartreibersignals ist, dass die Radarsendeeinheiten und die Radarempfangseinheiten in kompakter Bauweise mit kleinen Abmessungen hergestellt und bereitgestellt werden können. Hierdurch werden Bauraum und Kosten eingespart. Die Komplexität des Radarsystems liegt bei der erfindungsgemäßen Lösung in der Zentraleinheit und nicht mehr in der einzelnen Radarsendeeinheit bzw. der einzelnen Radarempfangseinheit. Die einzelnen Radarsendeeinheiten und Radarempfangseinheiten lassen sich hierdurch einfach und preiswert herstellen und im Falle eines Defektes einfach und schnell austauschen.

Die Radarantennenanordnung ermöglicht den verdeckten Verbau der einzelnen Radarchips hinter oder in die Frontscheibe, die A-, B-, C-Säule, Kotflügel, Stoßfänger oder ähnliche Strukturen. Ein Verbau innerhalb der Windschutzscheibe ist von Vorteil, da diese eine notwendige Steifigkeit aufweist und somit Positionsänderungen der Einzelantennenelemente untereinander durch Vibrationen o.Ä. gering sind im Vergleich zum Stoßfänger.

Die Radarchips mit Antenne können dabei entweder direkt auf der Innenseite der Windschutzscheibe (Fahrerkabine) befestigt werden oder die Radarchips können direkt in das Scheibenmaterial integriert werden. Die Emission der Strahlung erfolgt in beiden Fällen nach Außen. Durch die großflächige Anordnung der Radarchips lassen sich große Aperturen aufspannen, so dass Winkelseparierbarkeiten von 0,1 Grad und darunter erreicht werden können. Somit können Bildverarbeitungsalgorithmen für Radardaten verwendet werden.

Die Reflexionen der Tx-Radarchips am Übergang Scheibe-Luft können durch eine Orientierung der Radarantennen zwecks Abstrahlung im Brewster-Winkel minimiert werden. Gleiches gilt für die Rx-Kanäle. Gleichzeitig könnte der p-polarisierte Anteil der Radarstrahlung unterdrückt werden. Die in die Scheibe eingekoppelte Reststrahlung kann für die Kalibrierung der Einzelchips verwendet werden, indem z.B. die relative Lage der Chips zueinander ermittelt wird. Die Antennen des Array müssen nicht notwendigerweise im Abstand ganzzahliger vielfacher der halben Wellenlänge angeordnet sein (voll besetztes Array), sondern können bei geschickter Wahl der Antennenposition auch Lücken enthalten. Dieser Sparse-Array-Ansatz ermöglicht es, die Strahlcharakteristik nur geringfügig zu verändern, so dass immer noch eindeutig eine hohe Winkelseparierbarkeit bis hinab zu 0,1 Grad erreicht werden kann. Zur optischen Kontaktierung der Radarchips mit dem optischen Trägersignal können Wellenleiter direkt in die Scheibe integriert werden

Der Verbau einzelner Radarchips, welche eine große Gesamtapertur bilden ermöglicht ein Auflösungsvermögen vergleichbar zu LiDAR. Durch eine Sparse Array Konfiguration kann die zu verarbeitende Datenmenge reduziert werden, ohne die Auflösung signifikant einzuschränken. Aufgrund der geringen Abmessungen der Radareinrichtungen ist eine Anordnung der Radareinrichtungen an verdeckten Positionen möglich, sodass diese von außen oder Innen nicht sichtbar sind. Eine Integration in oder hinter Scheiben möglich, auch im Schwarzdruck. Eine Integration in ABC-Säulen oder in der Frontschürze ist möglich. Es ergibt sich die Möglichkeit, Bildverarbeitungsalgorithmen direkt auf Radardaten in der Steuereinheit anzuwenden. Durch eine Anordnung von Radareinrichtungen in einer Vielzahl verschiedener Bauteile des Fahrzeugs ist eine Abdeckung eines großen Sichtbereichs mit einem hohem Auflösungsvermögen möglich, welches vergleichbar mit dem von Lidar ist. In Fensterscheiben ergibt sich zudem die Möglichkeit, optische Wellenleiter für eine Anbindung der Radareinrichtungen an die Steuereinheit direkt in die Scheibe zu integrieren. Bei einer Anordnung der Radareinrichtungen in einer Fensterscheibe ergibt sich die Möglichkeit, die in die Scheibe eingekoppelten Reststrahlen für eine Kalibrierung der Einzelchips zu verwenden.

Gegenüber bekannten Verfahren ist die beschriebene Radarantennenanordnung kostengünstig, weil ausgereifte und etablierte Technologien bei der Produktion zum Einsatz kommen, die in Massenproduktion verfügbar sind. Zudem weist sie einen relativ einfachen Aufbau auf. Die Sparse-Array-Anordnung erlaubt eine Reduktion der Anzahl von Einzelsensoren. Die Nutzung von Anteilen der Radarstrahlen, die in eine Fensterscheibe eingekoppelt werden, erlaubt eine einfache Kalibrierung der Radarantennenanordnung 1. Die optische Kopplung erlaubt eine einfache Synchronisierung der einzelnen Antenneneinheiten. Es besteht die Möglichkeit, Bildverarbeitungsalgorithmen direkt auf Radardaten anzuwenden.

Insgesamt zeigt das Beispiel, wie durch die Erfindung eine Möglichkeit der Anordnung von Radareinrichtungen auf einem Fahrzeug bereitgestellt wird.

### Bezugszeichenliste

- 1: Radarantennenanordnung
- 2: Fahrzeug
- 3: Fahrzeugbauteil
- 4: Radareinrichtung
- 5: Bauteilfläche
- 6: Antennenzeile
- 7: Antennenspalte
- 8: Horizontaler Abstand
- 9: Vertikaler Abstand
- 10: Azimutalwinkel
- 11: Elevationswinkel
- 12: Radarstrahl
- 12a: Einzelstrahl
- 13: Optischer Leiter
- 14: Optisches Signal
- 15: Steuereinheit
- 16: Radarantenne
- 17: Radarchip

- S1-S5: Kalibrationsschritte
- α: Winkel zwischen Antennenzeile und Antennenspalte
- λ: Wellenlänge
- β: Brewsterwinkel
- θ1: Einfallswinkel
- θ2: Austrittswinkel
- θ3: Reflexionswinkel

## Patentansprüche

1. Radarantennenanordnung (1) für ein Fahrzeug (2), umfassend zumindest ein Fahrzeugbauteil (3), wobei die Radarantennenanordnung (1)
- mehrere Radareinrichtungen (4), eingerichtet zum Senden und/oder Empfangen eines Radarstrahls (12) aufweist,
- die Radareinrichtungen (4) auf einer Bauteilfläche (5) des Fahrzeugbauteils (3) angeordnet sind,
wobei die Radarantennenanordnung (1)
- zumindest eine Antennenzeile (6) zur Bestimmung eines Azimutalwinkels (10) des Radarstrahls (12) aufweist, die mehrere der Radareinrichtungen (4) umfasst, wobei die Radareinrichtungen (4) entlang der zumindest einen Antennenzeile (6) angeordnet sind und direkt benachbarte Radareinrichtungen (4) jeweilige horizontale Abstände (8) zueinander aufweisen,
- zumindest eine Antennenspalte (7) zur Bestimmung eines Elevationswinkels (11) des Radarstrahls (12) aufweist, die mehrere der Radareinrichtungen (4) umfasst, wobei die Radareinrichtungen (4) entlang der Antennenspalte (7) angeordnet sind und direkt benachbarte Radareinrichtungen (4) jeweilige vertikale Abstände (9) zueinander aufweisen,
- die zumindest eine Antennenzeile (6) und die zumindest eine Antennenspalte (7) einen Winkel α von 5 Grad bis 180 Grad einschließen,
**dadurch gekennzeichnet, dass**
die Radarantennenanordnung (1) zumindest einen optischen Leiter (13) aufweist, wobei die Radareinrichtungen (4) über den zumindest einen optischen Leiter (13) mit einer Steuereinheit (15) der Radarantennenanordnung (1) verbunden sind, wobei der optische Leiter (13) dazu eingerichtet ist, optische Signale (14) zwischen der Steuereinheit (15) und den Radareinrichtungen (4) zu übertragen,
wobei das Fahrzeugbauteil (3) eine Fensterscheibe ist,
und wobei der zumindest eine optische Leiter (13) zumindest abschnittsweise in der Fensterscheibe angeordnet ist.

2. Radarantennenanordnung (1) nach Anspruch 1,
**dadurch gekennzeichnet, dass**
die zumindest eine Antennenzeile (6) und die zumindest eine Antennenspalte (7) einen Winkel α von 60 Grad bis 120 Grad einschließen.

3. Radarantennenanordnung (1) nach Anspruch 1 oder 2,
**dadurch gekennzeichnet, dass**
die jeweiligen horizontalen Abstände (8) und die jeweiligen vertikalen Abstände (9) der Radareinrichtungen (4) ganzzahlige Vielfache einer vorbestimmten Radarwellenlänge λ sind, wobei die Radarwellenlänge λ zwischen 0,011 m bis 0,014 m oder 0,0037 bis 0,0038 m beträgt.

4. Radarantennenanordnung (1) nach einem der vorhergehenden Ansprüche,
**dadurch gekennzeichnet, dass**
die Radareinrichtungen (4) in einer Sparse-Array-Anordnung angeordnet sind.

5. Radarantennenanordnung (1) nach einem der vorhergehenden Ansprüche,
**dadurch gekennzeichnet, dass**
eine Hauptabstrahlrichtung zumindest einer der Radareinrichtungen (4) in einem Brewsterwinkel β zu einer äußeren Oberfläche der Fensterscheibe ausgerichtet ist.

6. Verfahren zum Kalibrieren einer Radarantennenanordnung (1) für ein Fahrzeug (2) nach einem der vorhergehenden Ansprüche, wobei das Fahrzeug (2) zumindest ein Fahrzeugbauteil (3) umfasst,
wobei die Radarantennenanordnung (1)
- mehrere auf einer Bauteilfläche des Fahrzeugbauteils (3) angeordnete Radareinrichtungen (4) aufweist, die zum Senden und/oder Empfangen eines Radarstrahls (12) eingerichtet sind, wobei das Fahrzeugbauteil (3) eine Fensterscheibe des Fahrzeugs (2) ist,
- zumindest einen zumindest abschnittsweise in der Fensterscheibe des Fahrzeugs (2) angeordneten optischen Leiter (13) aufweist, wobei der optische Leiter (13) dazu eingerichtet ist, optische Signale (14) zwischen einer Steuereinheit (15) der Radarantennenanordnung (1) und den Radareinrichtungen (4) zu übertragen,
wobei die Radareinrichtungen (4) über den zumindest einen optischen Leiter (13) mit der Steuereinheit (15) der Radarantennenanordnung (1) verbunden sind,
wobei die Radarantennenanordnung (1)
- zumindest eine Antennenzeile (6) zur Bestimmung eines Azimutalwinkels (10) des Radarstrahls (12) aufweist, die mehrere der Radareinrichtungen (4) umfasst, wobei die Radareinrichtungen (4) entlang der zumindest einen Antennenzeile (6) angeordnet sind und direkt benachbarte Radareinrichtungen (4) jeweilige horizontale Abstände (8) zueinander aufweisen,
- zumindest eine Antennenspalte (7) zur Bestimmung eines Elevationswinkels (11) des Radarstrahls (12) aufweist, die mehrere der Radareinrichtungen (4) umfasst, wobei die Radareinrichtungen (4) entlang der Antennenspalte (7) angeordnet sind und direkt benachbarte Radareinrichtungen (4) jeweilige vertikale Abstände (9) zueinander aufweisen,
wobei die zumindest eine Antennenzeile (6) und die zumindest eine Antennenspalte (7) einen Winkel α von 5 Grad bis 180 Grad einschließen,
wobei
- durch die Steuereinheit (15) mittels eines optischen Signals (14) eine erste der Radareinrichtungen (4) zur Abgabe eines vorbestimmten Teilstrahls angesteuert wird, wobei das optische Signal (14) mittels des optischen Leiters (13) übertragen wird,
- durch die erste der Radareinrichtungen (4) der vorbestimmte Teilstrahl ausgesandt wird,
- zumindest ein Teil des Teilstrahls innerhalb der Fensterscheibe reflektiert und von einer zweiten der Radareinrichtungen (4) empfangen wird,
- mittels des optischen Leiters (13) ein optisches Signal (14) von der zweiten der Radareinrichtungen (4) an die Steuereinheit (15) übertragen wird,
- durch die Steuereinheit (15) ein Abstand zwischen der ersten und der zweiten der Radareinrichtungen (4) bestimmt wird.

7. Fahrzeug (2), aufweisend zumindest eine Radarantennenanordnung (1) nach einem der Ansprüche 1 bis 5.

## Claims

1. A radar antenna arrangement (1) for a vehicle (2) comprising at least one vehicle component (3), wherein the radar antenna arrangement (1)
- comprises multiple radar devices (4) configured for transmitting and/or receiving a radar beam (12),
- the radar devices (4) are arranged on a component surface (5) of the vehicle component (3),
wherein the radar antenna arrangement (1)
- comprises at least one antenna row (6) for determining an azimuthal angle (10) of the radar beam (12), which includes multiple of the radar devices (4), wherein the radar devices (4) are arranged along the at least one antenna row (6) and directly adjacent radar devices (4) have respective horizontal distances (8) to each other,
- comprises at least one antenna column (7) for determining an elevation angle (11) of the radar beam (12), which includes multiple of the radar devices (4), wherein the radar devices (4) are arranged along the antenna column (7) and directly adjacent radar devices (4) have respective vertical distances (9) to each other,
- the at least one antenna row (6) and the at least one antenna column (7) include an angle α of 5 degrees to 180 degrees,
**characterized in that**
the radar antenna arrangement (1) comprises at least one optical guide (13), wherein the radar devices (4) are connected to a control unit (15) of the radar antenna arrangement (1) via the at least one optical guide (13), wherein the optical guide (13) is configured to transfer optical signals (14) between the control unit (15) and the radar devices (4),
wherein the vehicle component (3) is a window pane,
and wherein the at least one optical guide (13) is arranged in the window pane at least in sections.

2. The radar antenna arrangement (1) according to claim 1,
**characterized in that**
the at least one antenna row (6) and the at least one antenna column (7) include an angle α of 60 degrees to 120 degrees.

3. The radar antenna arrangement (1) according to claim 1 or 2,
**characterized in that**
the respective horizontal distances (8) and the respective vertical distances (9) of the radar devices (4) are integer multiples of a predetermined radar wavelength λ, wherein the radar wavelength λ is between 0.011 m and 0.014 m or 0.0037 to 0.0038 m.

4. The radar antenna arrangement (1) according to any one of the preceding claims,
**characterized in that**
the radar devices (4) are arranged in a sparse array arrangement.

5. The radar antenna arrangement (1) according to any one of the preceding claims,
**characterized in that**
a principal radiation direction of at least one of the radar devices (4) is oriented to an outer surface of the window pane at a Brewster angle β.

6. A method for calibrating a radar antenna arrangement (1) for a vehicle (2) according to any one of the preceding claims, wherein the vehicle (2) includes at least one vehicle component (3),
wherein the radar antenna arrangement (1)
- comprises multiple radar devices (4) arranged on a component surface of the vehicle component (3), which are configured for transmitting and/or receiving a radar beam (12), wherein the vehicle component (3) is a window pane of the vehicle (2),
- comprises at least one optical guide (13) arranged in the window pane of the vehicle (2) at least in sections, wherein the optical guide (13) is configured to transfer optical signals (14) between a control unit (15) of the radar antenna arrangement (1) and the radar devices (4),
wherein the radar devices (4) are connected to the control unit (15) of the radar antenna arrangement (1) via the at least one optical guide (13),
wherein the radar antenna arrangement (1)
- comprises at least one antenna row (6) for determining an azimuthal angle (10) of the radar beam (12), which includes multiple of the radar devices (4), wherein the radar devices (4) are arranged along the at least one antenna row (6) and directly adjacent radar devices (4) have respective horizontal distances (8) to each other,
- comprises at least one antenna column (7) for determining an elevation angle (11) of the radar beam (12), which includes multiple of the radar devices (4), wherein the radar devices (4) are arranged along the antenna column (7) and directly adjacent radar devices (4) have respective vertical distances (8) to each other,
wherein the at least one antenna row (6) and the at least one antenna column (7) include an angle α of 5 degrees to 180 degrees,
wherein
- a first one of the radar devices (4) is controlled for emitting a predetermined partial beam by means of an optical signal (14) by the control unit (15), wherein the optical signal (14) is transferred by means of the optical guide (13),
- the predetermined partial beam is transmitted by the first one of the radar devices (4),
- at least a part of the partial beam is reflected within the window pane and received by a second one of the radar devices (4),
- an optical signal (14) is transferred from the second one of the radar devices (4) to the control unit (15) by means of the optical guide (13),
- a distance between the first one and the second one of the radar devices (4) is determined by the control unit (15).

7. A vehicle (2) comprising at least one radar antenna arrangement (1) according to any one of claims 1 to 5.

## Revendications

1. Système d'antenne radar (1) pour un véhicule (2), comprenant au moins un composant de véhicule (3), le système d'antenne radar (1)
- possédant plusieurs dispositifs radar (4) conçus pour émettre et/ou recevoir un faisceau radar (12),
- les dispositifs radar (4) étant disposés sur une surface de composant (5) du composant de véhicule (3),
le système d'antenne radar (1)
- possédant au moins une ligne d'antennes (6) destinée à déterminer un angle azimutal (10) du faisceau radar (12), laquelle comprend plusieurs des dispositifs radar (4), les dispositifs radar (4) étant disposés le long de l'au moins une ligne d'antennes (6) et les dispositifs radar (4) directement adjacents présentant des écarts horizontaux (8) respectifs les uns des autres,
- possédant au moins une colonne d'antennes (7) destinée à déterminer un angle d'élévation (11) du faisceau radar (12), laquelle comprend plusieurs des dispositifs radar (4), les dispositifs radar (4) étant disposés le long de la colonne d'antennes (7) et les dispositifs radar (4) directement adjacents présentant des écarts verticaux (9) respectifs les uns des autres,
- l'au moins une ligne d'antennes (6) et l'au moins une colonne d'antennes (7) formant un angle α de 5 degrés à 180 degrés,
**caractérisé en ce que**
le système d'antenne radar (1) possédant au moins un conducteur optique (13), les dispositifs radar (4) étant reliés à une unité de commande (15) du système d'antenne radar (1) par l'intermédiaire du conducteur optique (4), le conducteur optique (13) étant conçu pour transmettre des signaux optiques (14) entre l'unité de commande (15) et les dispositifs radar (13),
le composant de véhicule (3) étant une vitre,
et l'au moins un conducteur optique (13) étant disposé au moins par portions dans la vitre.

2. Système d'antenne radar (1) selon la revendication 1,
**caractérisé en ce que**
l'au moins une ligne d'antennes (6) et l'au moins une colonne d'antennes (7) forment un angle α de 60 degrés à 120 degrés.

3. Système d'antenne radar (1) selon la revendication 1 ou 2,
**caractérisé en ce que**
les écarts horizontaux (8) respectifs et les écarts verticaux (9) respectifs des dispositifs radar (4) sont des multiples entiers d'une longueur d'onde radar λ prédéterminée, la longueur d'onde radar λ étant comprise entre 0,011 m et 0,014 m ou entre 0,0037 et 0,0038 m.

4. Système d'antenne radar (1) selon l'une des revendications précédentes,
**caractérisé en ce que**
les dispositifs radar (4) sont disposés selon un arrangement en réseau clairsemé.

5. Système d'antenne radar (1) selon l'une des revendications précédentes,
**caractérisé en ce que**
une direction de rayonnement principale d'au moins l'un des dispositifs radar (4) est orientée selon un angle de Brewster β par rapport à une surface extérieure de la vitre.

6. Procédé d'étalonnage d'un système d'antenne radar (1) pour un véhicule (2) selon l'une des revendications précédentes, le véhicule (2) comportant au moins un composant de véhicule (3),
le système d'antenne radar (1)
- possédant plusieurs dispositifs radar (4) disposés sur une surface de composant du composant de véhicule (3), qui sont conçus pour émettre et/ou recevoir un faisceau radar (12), le composant de véhicule (3) étant une vitre du véhicule (2),
- possédant au moins un conducteur optique (13) disposé au moins par portions dans la vitre du véhicule (2), le conducteur optique (13) étant conçu pour transmettre des signaux optiques (14) entre une unité de commande (15) du système d'antenne radar (1) et les dispositifs radar (4),
les dispositifs radar (4) étant reliés à l'unité de commande (15) du système d'antenne radar (1) par l'intermédiaire de l'au moins un conducteur optique (13),
le système d'antenne radar (1)
- possédant au moins une ligne d'antennes (6) destinée à déterminer un angle azimutal (10) du faisceau radar (12), laquelle comprend plusieurs des dispositifs radar (4), les dispositifs radar (4) étant disposés le long de l'au moins une ligne d'antennes (6) et les dispositifs radar (4) directement adjacents présentant des écarts horizontaux (8) respectifs les uns des autres,
- possédant au moins une colonne d'antennes (7) destinée à déterminer un angle d'élévation (11) du faisceau radar (12), laquelle comprend plusieurs des dispositifs radar (4), les dispositifs radar (4) étant disposés le long de la colonne d'antennes (7) et les dispositifs radar (4) directement adjacents présentant des écarts verticaux (9) respectifs les uns des autres,
l'au moins une ligne d'antennes (6) et l'au moins une colonne d'antennes (7) formant un angle α de 5 degrés à 180 degrés,
- un premier des dispositifs radar (4) étant commandé par l'unité de commande (15) au moyen d'un signal optique (14) afin de délivrer un faisceau partiel prédéterminé, le signal optique (14) étant transmis au moyen du conducteur optique (13),
- le faisceau partiel prédéterminé étant émis par le premier des dispositifs radar (4),
- au moins une partie du faisceau partiel étant réfléchie à l'intérieur de la vitre et reçue par un deuxième des dispositifs radar (4),
- un signal optique (14) étant transmis par le deuxième des dispositifs radar (4) à l'unité de commande (15) au moyen du conducteur optique (13),
- un écart entre le premier et le deuxième des dispositifs radar (4) étant déterminé par l'unité de commande (15).

7. Véhicule (2), possédant au moins un système d'antenne radar (1) selon l'une des revendications 1 à 5.
